# EUROPEAN PATENT SPECIFICATION

(11) **EP 0 903 326 B1**
(45) Date of publication and mention of the grant of the patent: **04.10.2001**
(21) Application number: 98830304.6
(22) Date of filing: 19.05.1998
(51) Int. Cl.: C03B 7/10

(54) **Device for cutting gobs of molten glass coming out of a feeder of a glassware production machine**
Vorrichtung zum Schneiden von geschmolzene Glastropfen aus dem Speiser einer Glasfertigungsmaschine
Dispositif pour couper des postes discrets de verre fondu sortant d'une machine de fabrication d'objets en verre

(30) Priority: 17.09.1997 IT TO970819
(43) Date of publication of application: 24.03.1999
(73) Proprietor: BDF-BOSCATO & DALLA FONTANA s.p.a., I-36100 Vicenza (IT)
(72) Inventor: Sasso, Daniele, 36100 Vicenza (IT); Bellina, Claudio, 36030 Caldogno (Vicenza) (IT); Scabio, Mirco, 36010 Monticello Conte Otto (Vicenza) (IT)
(74) Representative: Notaro, Giancarlo

(56) References cited:
- EP-A- 0 164 902
- EP-A- 0 202 809
- EP-A- 0 203 740
- EP-A- 0 294 057
- EP-A- 0 490 294
- EP-A- 0 712 812
- US-A- 4 444 079

## Description

The present invention relates to devices for cutting gobs of molten glass coming out from a feeder of a glassware production machine, of the known type comprising:
- a supporting frame, which is to be mounted on a supporting structure of the machine,
- first and second blade carrying carriages slidably mounted on said supporting frame along a common straight direction, so as to be movable towards and away from each other,
- one or more pairs of blades for cutting the gobs of molten glass coming out of said feeder of said machine, the two blades of each pair being supported by said first and second blade carrying carriages respectively, so that they are movable between a first inoperative opened position and a second operative closed position in which the two blades of each pair are able to cooperate with each other for cutting a respective gob of molten glass, and
- means for driving movement of said first and second blade carrying carriages between said opened and closed positions of the blades.

Devices of the above indicated type, called "parallel" (or "straight-line") shear devices by skilled men in the art, have been known and used for a long time (EP-A-0 202 809, EP-A-0 294 057, EP-A-0 164 902, EP-A-0 490 294). They are preferred to another type of cutting devices which have an angular movement of the blades controlled mechanically or electronically (US-A-4 444 079) since in these latter devices, above all when they are used for cutting more than two glass gobs simultaneously, the pair of blades which is more spaced from the axis of the blade angular movement carries out the cutting operation with a non negligible delay with respect to the pair of blades which are closer to the axis of rotation.

On the other hand, also the cutting devices with parallel movement of the blades, either with mechanical control or with electronic control, have some drawbacks. All these devices provide for the use of driving electric motors and a transmission able to transform the rotary movement of the output shaft of the electric motor into a straight-line movement of the blade carrying carriages. In some cases (EP-A-0 202 809, EP-A-0 294 057) this transmission includes a sprocket-and-rack system, in other cases (EP-A-0 164 902) a system with a crank mechanism is provided and yet in other cases (EP-A-0 490 294) a screw-and-nut system including a screw provided with planet rollers.

The high cutting cadences of these devices, which are greater than 200 cuts per minute, involve high speeds of the blade carrying carriages (greater than 2m/s) and high linear accelerations (greater than 50m/s²) which cause very high stresses on the members of the transmission, with resulting rapid wear of the lateral guides which are provided for the blade carrying carriages. Furthermore, the high accelerations at start, i.e. at the beginning of the movement of the blade from the opened position towards the closed position, and when this movement is inverted, i.e. when, after cutting has been carried out, the blades are moved back towards the opened position, cause very high specific pressures on the members of the transmission, such as on the threads of the roller screw, the teeth of the sprocket driving the rack and the swivel joints of the connecting-rod and crank unit, respectively, in the known cases mentioned above, thus causing rapid wear of the members and a resulting loss of precision and quality of cutting. In the particular case of use of a roller screw, moreover, this screw gives rise to tilting torques on the blade carrying carriages driven thereby, which are transmitted to the carriage guides, increasing the problems of wear with the time.

Due to all the above indicated problems, there is not at present a cutting device with parallel movement of the blades which can be defined as fully reliable.

EP-A2-0 712 812 discloses a device having all the features indicated in the pre-characterizing portion of claim 1, which however is relatively complicated and costly.

The object of the present invention is that of providing a cutting device with parallel movement of the blades, of the type disclosed in EP-A2-0712812 ,which is able to overcome all the drawbacks of the prior art which has been discussed above.

In view of achieving this object, the invention provides a device for cutting gobs of molten glass coming out of a feeder of a glassware production machine, of the type provided with straight-line movement of the blades, having all the features indicated in claim 1.

The advantage of applying linear electric motors to the cutting device according to the invention lies in a perfectly balanced operation of the blade carrying carriages, which are subject almost totally only to the attraction force generated between the stator and the movable member of each linear motor. This attraction force, which in the case of the application of interest is in the order of 8.000 N, is supported only by a system of linear guides which therefore are subjected only to compression forces, thus eliminating any tilting and torsioning torques which are generated in the case of the known systems making use of roller screws.

Any wear of the guides with the time does not give origin to plays, as in the known devices, since the attraction force between the two members of each linear electric motor automatically takes up the wear of the guides, always keeping the movable part of the guides compressed against the static part.

According to a preferred feature, the above mentioned means for controlling said linear electric motors, which are able to cause simultaneous and symmetric movements of the movable members of the two motors, comprise programmable electronic control means, for controlling movement of the motors according to a feed-back logic, and means for sensing the positions of the movable members of the motors. Preferably, these sensor means comprise hall-type sensors mounted on the movable members of the motors, and linear encoders mounted outside of the motors.

Yet in the case of a preferred embodiment, said supporting frame is arranged so that motors and linear guides lie in a horizontal plane. However, it is also possible alternatively to provide an arrangement of the motors and the linear guides in a vertical plane, keeping the movement of the carriages on a horizontal plane.

According to a further preferred feature of the invention, the supporting frame is provided with means for pivotal connection to the supporting structure of the machine between an operative position adjacent the outlet of the feeder and an inoperative position spaced from said outlet, in which it is possible for instance to proceed to replacement of the blades.

Further features and advantages of the invention will become apparent from the following description with reference to the annexed drawings, given purely by way of non limiting example, in which:
figures 1, 2 show a plan diagrammatic view of a preferred embodiment of the device according to the invention, in the opened and closed conditions of the blades respectively,
figures 3, 4 are cross-sectional views taken along lines III-III and IV-IV of figure 1, respectively,
figures 5, 6 show a cross-sectional view taken along line V-V of figure 2 and VI-VI of figure 1, and
figure 7 shows a diagram of the system for controlling the linear electric motors used in the device according to the invention.

In the drawings, reference numeral 1 generally designates a device for cutting gobs of molten glass coming out of a feeder of glassware production machine. The drawings do not show this machine, since it does not fall within the scope of the present invention. According to a known art, this machine comprises a fixed supporting structure. The device 1 according to the invention is to be mounted on said structure in a position adjacent to the outlet of said feeder of the machine from which beads of molten glass fall, which are cut by means of the device according to the invention.

In the preferred embodiment which is shown in the drawings, the device is to be mounted on the fixed structure of the machine, below the feeder, with a horizontal orientation. To this end, the device 1 comprises a supporting frame generally designated by 2 in the annexed drawings.

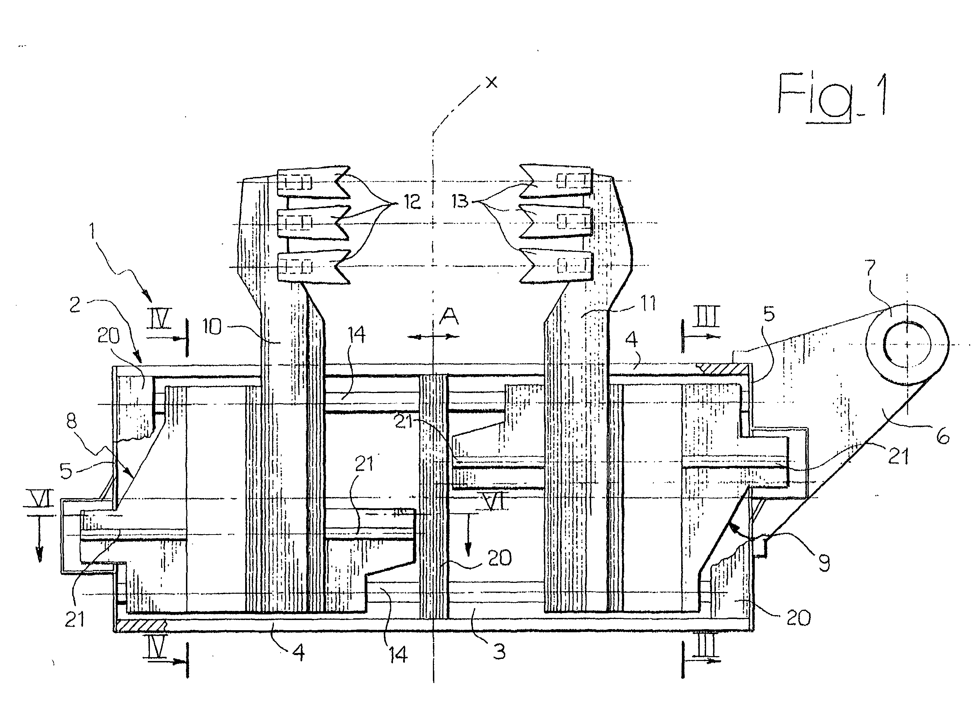

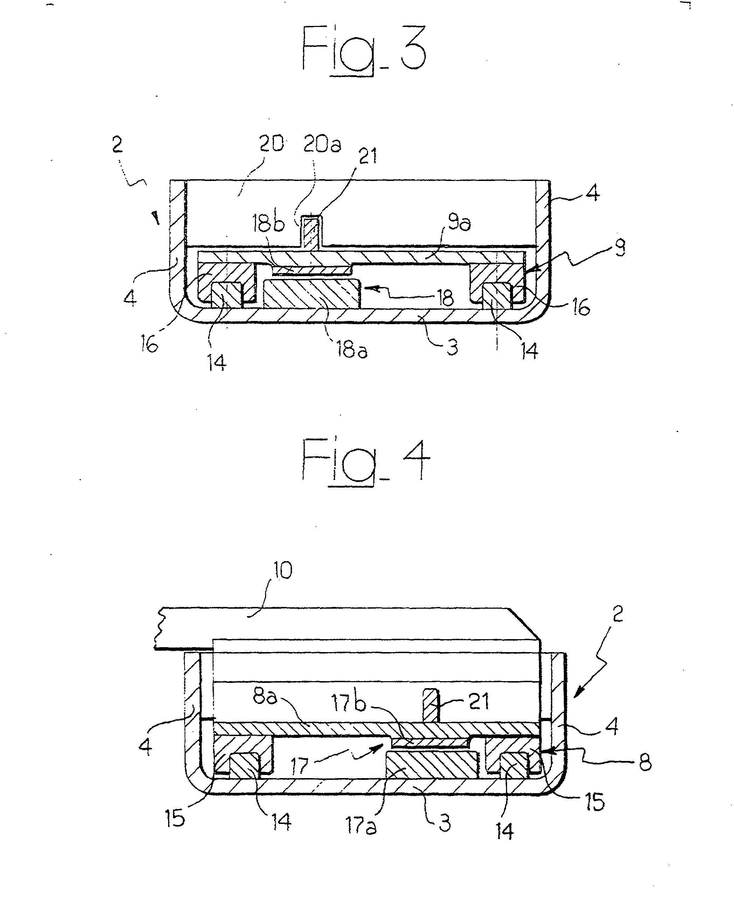

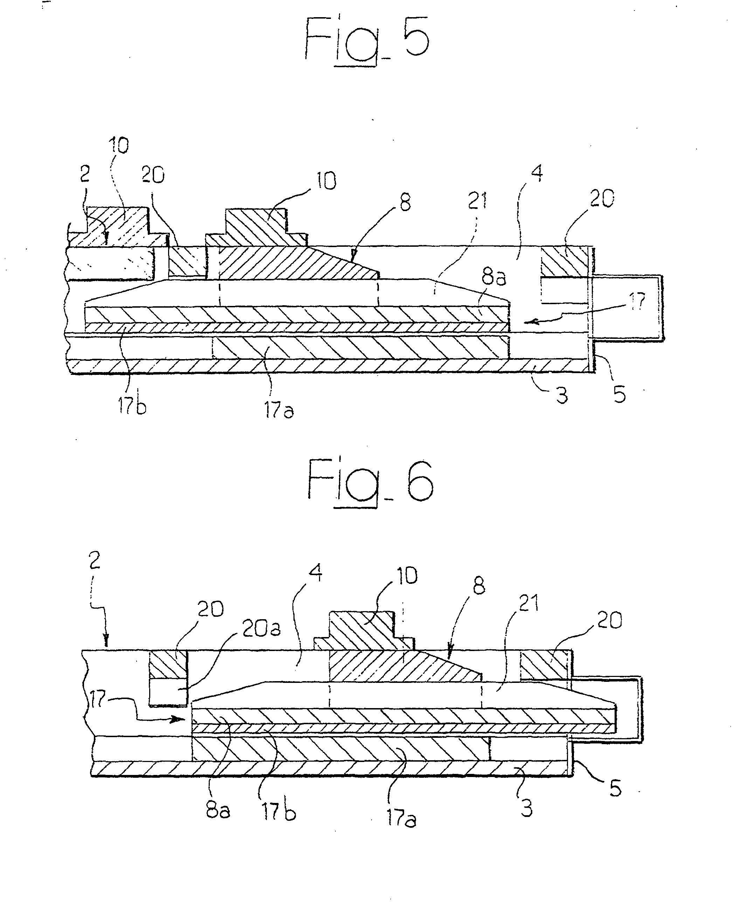

In the illustrated example, frame 2 comprises a lower horizontal wall 3 (see figures 3-6), two side walls 4 and two end walls 5 (see figure 1) and is instead opened at its upper part. The frame 2 further includes a bracket 6 including an articulation support 7 which is to be pivotally mounted, in any known way, around a vertical axis on the supporting structure of the machine, so that the entire device 1 according to the invention can be displaced between an operative position adjacent to the outlet of the feeder of the machine, and an inoperative position, spaced from said outlet (for instance by an angle of about 70°), to which the device can be brought when it is necessary to carry out maintenance operations thereon, such as for replacing the blades provided on the device, as it will become apparent from the following description.

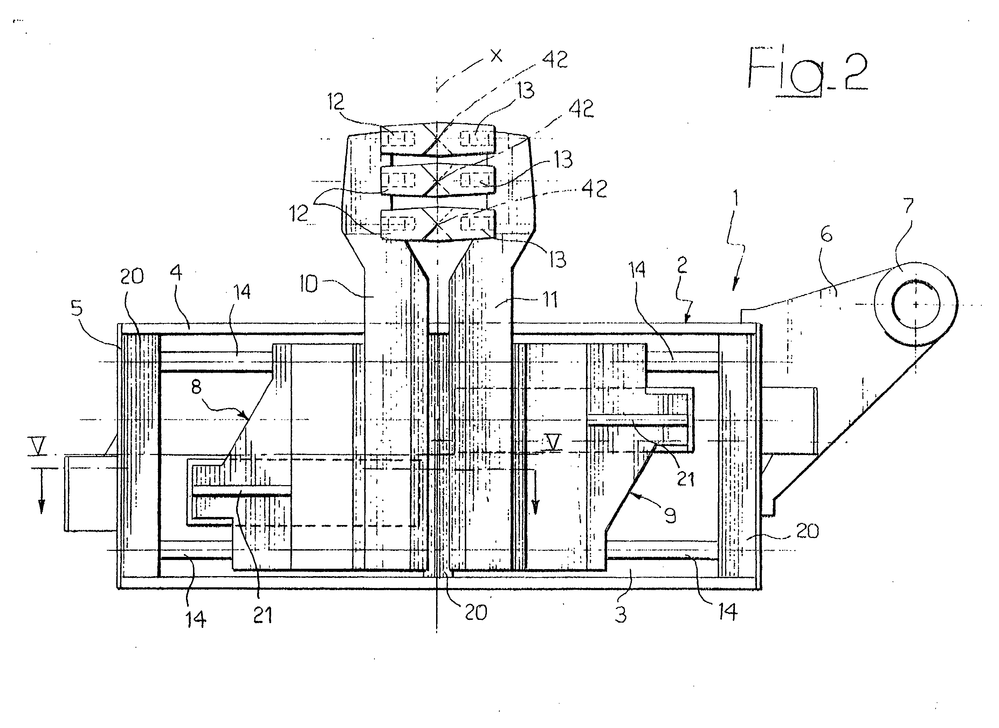

The device 1 comprises two blade carrying carriages 8, 9 which are slidably mounted towards and away from each other on the supporting frame 2 along a common straight direction designated by arrows A in figures 1, 2.

The two carriages 8, 9 carry two arms 10, 11 at their upper part, which project horizontally in a cantilever fashion from one side of the supporting frame 2 and carrying a plurality of pairs (three pairs, in the illustrated embodiment) of blades 12, 13 which are to cooperate with each other to cut an identical number of glass beads coming out of the machine feeder. The structure and specific shape of the blades 12, 13 is not described herein in detail, since these blades can be made in any known way and since these details of construction do not fall, taken alone, within the scope of the present invention.

On the bottom wall 3 of the supporting frame 2 there are rigidly connected by means of connecting means of any known type, two straight guides 14 on which both carriages 8, 9 are slidably mounted. Each of these carriages has a lower plate 8a, 9a on whose lower surface there are fixed two supports 15 and 16 (figures 3, 4) which are slidably mounted on the guides 14, so as to slidably support carriages 8, 9 in the direction A shown in figure 1.

The sliding guides 14 and the associated slidable supports 15, 16 are shown only diagrammatically in the drawings, since the details of construction of these elements can be made in any known way. For instance, it is possible to provide roller guides or prismatic guides or also cylindrical guides having slidable pushes or ball sleeves. These details of construction are not shown in the annexed drawings and are not described herein, since, as already indicated, they can be of any known type and they do not fall, taken alone, within the scope of the present invention. Furthermore, the deletion of these details from the drawings renders the latter simpler and easier to understand.

The movement of the two carriages 8, 9 is driven, according to the invention, by two linear electric motors, generally designated by 17 and 18 in figures 3, 4, which have a stator bar 17a, 18a, carrying the motor windings, rigidly connected to the bottom wall 3 of the supporting frame 2, and a movable bar 17b, 18b carrying the magnets, which is rigidly connected to the lower plate, respectively designated by 8a and 9a, of the two carriages 8, 9. Also the details of construction of each linear electric motor are not described and shown herein, since these motors can be of any known type available on the market, suitable for the application being discussed.

The two motors 17, 18 have their longitudinal dimension extending parallel to the sliding direction A of the two carriages 8, 9 and have their stators 17a, 18a parallel and spaced apart from each other and arranged within the space available between the two straight guides 14.

It is still to be noted that the two longitudinal guides 4 of the supporting frame 2 are connected to each other at the center and the ends of frame 2 by three cross members 20 (see figure 1, figure 3 and figures 5, 6) which extend throughout the whole length of the supporting frame 2 and have a lower edge with a notch 20a in which a longitudinal rib 21 engages which is formed at each end of each of the carriages 8, 9.

The principle of operation of the linear motors 17, 18 is similar to that of a brushless rotary electric motor, in which magnets and windings have been developed on a plane.

In one embodiment of the cutting device according to the invention which has been put into practice by the Applicant, each linear motor is able to provide a force of about 8.000 N and has a length of travel of about 180 mm.

According to a technique known per se, it is possible to use a micrometric adjustment device for adjusting the distance between magnets and windings of each motor. The length of the movable bar 17b, 18b of each of the two linear electric motors 17, 18 is identical to the length of the stator bar 17a, 18a added of the length of travel, such as 180 mm, which is desired for the carriage.

The two carriages 8, 9 are driven independently by the two linear motors 17, 18. These motors are controlled in a synchronized manner in order to provide simultaneous movements of the two carriages 8, 9 towards and away from each other, symmetrically with respect to the plane X shown in figure 1, containing the axes along which the gobs of molten glass fall, which are designated by 42 in figure 2.

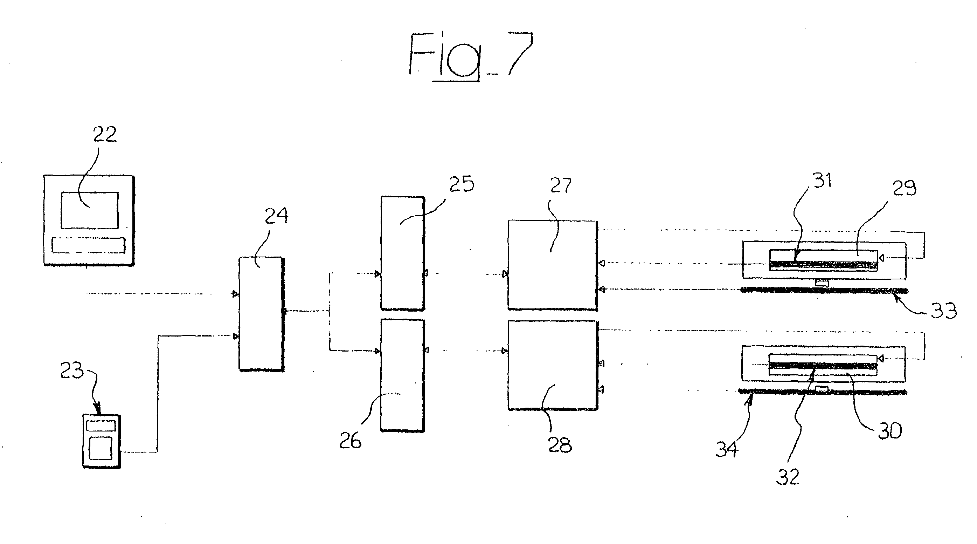

Figure 7 shows the system for driving and controlling the cutting device according to the invention. The operator interface is constituted for example by a computer 22 or a portable terminal 23 with a serial connection to a CPU board 24 for programming the operation of the two linear motors 17, 18. The CPU board 24 sends programmation data to two motor control boards 25 and 26 each of which sends reference signals and receives feedback signals from motor actuating units 27, 28. The motor actuating units 27, 28 on their turn respectively control linear motors 17, 18 by commutation of the currence in windings 29, 30 of the two motors. The control of current commutation and motor position is carried out with the aid of hall sensors 31, 32 mounted on the windings 29, 30, which instantaneously provide the actual position of the motors, as well with the aid of a linear encoder 33, 34 mounted outside of the motor. The control feedback is closed on the actuating units 27, 28 of the motors.

From the foregoing description, it is clearly apparent that the device according to the invention overcomes the drawbacks of the prior art while ensuring full reliability of operation. The main advantage of the application of a linear servomotor in the parallel cutting device lies in the perfectly balanced operation of the blade carrying carriages, which are subject almost entirely only to the attraction force generated between the movable member and the stationary member of each motor. This attraction force is supported only by a system of linear guides which are thus subjected only to compression forces, with no tilting and torsioning torques as in the case of the known systems making use of roller screws. Any wear of the guides with the time does not give rise to plays, as in the known devices, since the attraction force between the two members of the motor automatically takes up the wear of the guides while keeping the movable member and the static member of each guide always compressed against each other.

Naturally, while the principle of the invention remains the same, the details of construction and the embodiments may widely vary, without departing from the scope of the present invention as defined in the annexed claims.

For instance, the use of a single linear electric motor for driving the relative movement of the two blade carrying carriages cannot be excluded.

## Claims

1. Device for cutting gobs of molten glass coming out of a feeder of a glassware production machine, comprising:
- a supporting frame (2), which is to be mounted on a supporting structure of said machine,
- first and second blade carrying carriages (8, 9) slidably mounted on said supporting frame (2) so as to be movable towards and away from each other along a common straight direction (A),
- one or more pairs of blades (12,13) for cutting the gobs of molten glass coming out of said feeder of said machine, the two blades (12,13) of each pair being carried by said first and said second blade carrying carriages (10,11) respectively, so as to be movable between a first opened inoperative position and a second closed operative position, in which the two blades (12,13) of each pair are able to cooperate with each other for cutting a respective gob of molten glass, and
- two linear electric motors (17,18) for driving movement of said first and second blade carrying carriages (8,9) between said opened and closed positions of the blades (12,13), each of said linear electric motors (17,18) having one stator (17a,18a) connected to said supporting frame (2) and a movable member (17b,18b) connected to a respective one of said first and second blade carrying carriages (8,9), said first and second blade carrying carriages (8,9) being slidably mounted on parallel and spaced apart straight guides (14) connected to said supporting frame (2),
- means (22-34) for controlling said linear electric motors (17, 18) to cause simultaneous movements of the movable members (17b, 18b) of the two motors (17, 18) symmetrically with respect to a plane (X) containing the axes (21) along which the glass gobs fall,
**characterized in that**:
- said device comprises a single pair of said straight guides (14), which are connected to a common bottom wall (3) of said supporting frame (2),
- the stators (17a,18a) of said linear electric motors (17,18) are arranged parallel to said guides on said common bottom wall (3) of said supporting structure (2) and within the space between said straight guides (14), (14) and are spaced apart from each other = in the longitudinal direction of the straight guides as well as in a direction perpendicular to this longitudinal direction,
- both of said blade carrying carriages (8, 9) are slidably mounted on said pair of guides (14), each carriage being slidably mounted on both guides (14),
- wherein the stator (17a,18a) of each of said linear electric motors (17,18) carries the motor windings, whereas the movable member carries the magnet unit, and
- wherein said carriages comprise respective plates (8a,9a) rigidly connected to the movable members of the respective linear electric motors (17,18) and each carrying a pair of supports (15, 16) slidably mounted on said common guides (14).

2. Cutting device according to claim 1, **characterized in that** said means for controlling the linear electric motors (17, 18) comprise programmable electronic control means, for controlling movements of the motors according to a feedback logic, and means for sensing the position of the movable members of the motors.

3. Cutting device according to claim 2, **characterized in that** said sensor means comprises Halleffect sensors (31, 32) mounted on the movable members of the motors, and linear encoders (33, 34) mounted on the outside of the motors.

4. Cutting device according to any of the previous claims, **characterized in that** said supporting frame (2) is arranged so that said motors (17,18) and linear guides (14) lie in a horizontal plane.

5. Cutting device according to any of the previous claims, **characterized in that** said supporting frame (2) is arranged so that said motors (17,18) and linear guides (14) lie in a vertical plane.

6. Cutting device according to any of the previous claims, **characterized in that** said supporting frame (2) is provided with means (6, 7) for pivotal connection to the supporting structure of said machine between an operative position adjacent to the outlet of said feeder and an inoperative position spaced from said outlet.

7. Cutting device according to claim 1, **characterized in that** said straight guides (14) are connected to each other at the center and the ends of said supporting frame (2) by three cross-members (20), each having a lower edge with a notch (20a) in which a longitudinal rib (21) engages which is formed at each end of each of said carriages (8,9).

## Patentansprüche

1. Vorrichtung zum Schneiden von geschmolzenen
Glastropfen aus dem Speiser einer
Glasfertigungsmaschine des bekannten Typs, welche umfasst :
- einen auf eine Stützstruktur der Maschine zu montierenden Stützrahmen (2),
- erste und zweite Klingen tragende Schlitten (8, 9), die auf den Stützrahmen (2) gleitbar montiert sind, und so aufeinander zu und voneinander weg längs einer gemeinsamen geraden Richtung (A) bewegbar sind,
- ein oder mehrere Klingenpaare (12, 13) zum Schneiden der geschmolzenen Glastropfen aus dem Speiser der Maschine, wobei die beiden Klingen (12, 13) eines jeden Paars jeweils durch die ersten und zweiten Klingen tragenden Schlitten (10, 11) gestützt werden, so dass sie zwischen einer ersten geöffneten Ruheposition und einer zweiten geschlossenen Arbeitsposition, bei welcher die beiden Klingen (12, 13) eines jeden Paars zusammenwirken können um einen jeweiligen geschmolzenen Glastropfen zu schneiden, bewegbar ,sind, und
- zwei Linearelektromotoren (17, 18) zur Antriebsbewegung der ersten und zweiten Klingen tragenden Schlitten (8, 9) zwischen der offenen und geschlossenen Position der Klingen (12, 13), wobei jeder der Linearmotoren (17, 18) einen mit dem Stützrahmen (2) verbundenen Ständer (17a, 18a) und ein mit einem jeweiligen der ersten und zweiten Klingen tragenden Schlitten (8, 9) verbundenes bewegbares Glied (17b, 18b) aufweist, und die ersten und zweiten Klingen tragenden Schlitten (8, 9) auf mit dem Stützrahmen (2) verbundene parallele und voneinander beabstandete gerade Führungen (14) gleitbar montiert sind,
- Mittel (22-34) zum Kontrollieren der Linarelektromotoren (17, 18) um symmetrisch in Bezug auf eine Ebene (X), welche die Achsen (21) enthält, entlang derer die Glastropfen fallen, simultane Bewegungen der bewegbaren Glieder (17b, 18b) der beiden Motoren (17, 18) auszulösen,
**dadurch gekennzeichnet, dass**
- die Vorrichtung ein einzelnes Paar gerader Führungen (14) umfasst, die mit einer gemeinsamen Bodenwand (3) des Stützrahmens (29 verbunden sind,
- die Ständer (17a, 18a) der Linearmotoren (17, 18) parallel zu den Führungen auf der gemeinsamen. Bodenwand (3) der Stützstruktur (2) und innerhalb des Raums zwischen den Führungen (14) angeordnet sind, und in der Längsrichtung der geraden Führungen sowie in einer zu dieser Längsrichtung senkrechten Richtung voneinander beabstandet sind,
- beide der Klingen tragenden Schlitten (8, 9) auf das Führungspaar (14) gleitbar montiert sind, wobei jeder Schlitten auf beide Führungen (14) gleitbar montiert ist,
- wobei der Ständer (17a, 18a) eines jeden der Linearelektromotoren (17, 18) die Motorwindungen trägt, wohingegen das bewegbare Glied die Magneteinheit trägt, und
- wobei die Schlitten jeweilige Platten (8a, 9a) umfassen, die mit den bewegbaren Gliedern der jeweiligen Linearelektromotoren (17, 18) starr verbunden sind, und jeder ein Paar von Stützen (15, 16) trägt, die auf die gemeinsamen Führungen (14) gleitbar montiert sind.

2. Schneidvorrichtung nach Anspruch 1,
**dadurch gekennzeichnet, dass** die Mittel zum
Kontrollieren.der Linearelektromotoren (17, 18) programmierbare elektronische Mittel zum Kontrollieren der Bewegungen der Motoren gemäß einer
Rückkopplungslogik und Mittel zum Erfassen der Position der bewegbaren Glieder der Motoren umfassen.

3. Schneidvorrichtung nach Anspruch 2,
**dadurch gekennzeichnet, dass** das Sensormittel auf die bewegbaren Glieder des Motors montierte Hall-Effekt-Sensoren (31, 32) und auf der Außenseite des Motors angebrachte Linearkodierer (33, 34) umfasst.

4. Schneidvorrichtung nach einem der vorhergehenden Ansprüche,
**dadurch gekennzeichnet, dass** der Stützrahmen (2) so angeordnet ist, **dass** die Motoren (17, 18) und die Linearführungen (14) in einer horizontalen Ebene liegen.

5. Schneidvorrichtung nach einem der vorhergehenden Ansprüche,
**dadurch gekennzeichnet, dass** der Stützrahmen (2) so angeordnet ist, **dass** die Motoren (17, 18) und die Linearführungen (14) in einer vertikalen Ebene liegen.

6. Schneidvorrichtung nach einem der vorhergehenden Ansprüche,
**dadurch gekennzeichnet, dass** der Stützrahmen (2) mit
Mitteln (6, 7) zur Drehverbindung mit der Stützstruktur der Maschine zwischen einer dem Auslass des Speisers angrenzenden Arbeitsposition und einer von dem Auslass beabstandeten Ruheposition ausgestattet ist.

7. Schneidvorrichtung nach Anspruch 1,
**dadurch gekennzeichnet, dass** die geraden Führungen (14) in der Mitte und an den Enden der Stützstruktur (2) durch drei Querträger (20) miteinander verbunden sind, von denen jeder einen unteren Rand mit einer Nut(20a), in welche eine Längsrippe (21) eingreift, welche an jedem Ende jedes Schlittens (8, 9) geformt ist, aufweist.

## Revendications

1. Appareil de coupe de paraisons de verre fondu provenant d'un organe d'alimentation d'une machine de production de verrerie, comprenant :
un châssis de support (2) destiné à être monté sur une structure de support de la machine,
un premier et un second chariot (8, 9) de transport de lames montés de façon coulissante sur le châssis de support (2) afin qu'ils soient mobiles et se rapprochent et s'écartent mutuellement suivant une direction commune (A),
une ou plusieurs paires de lames (12, 13) destinées à couper les paraisons de verre fondu provenant de l'organe d'alimentation de la machine, les deux lames (12, 13) de chaque paire étant portées par les premier et second chariots (10, 11) de support de lames respectivement, afin qu'elles soient mobiles entre une première position ouverte de repos et une seconde position fermée de fonctionnement dans laquelle les deux lames (12, 13) de chaque paire peuvent coopérer mutuellement pour couper une paraison respective de verre fondu,
deux moteurs électriques linéaires (17, 18) destinés à commander le déplacement des premier et second chariots (8, 9) de support de lames entre les positions d'ouverture et de fermeture des lames (12, 13), chacun des moteurs électriques linéaires (17, 18) ayant un stator (17a, 18a) raccordé au châssis de support (2) et un organe mobile (17b, 18b) raccordé à un chariot respectif choisi parmi le premier et le second chariot de support de lames (8, 9), le premier et le second chariot de support de lames (8, 9) étant montés de façon coulissante sur des guides rectilignes parallèles et espacés (14) raccordés au châssis de support (2), et
un dispositif (22-34) de commande des moteurs électriques linéaires (17, 18) afin qu'il provoque des mouvements simultanés des organes mobiles (17b, 18b) des deux moteurs (17, 18) symétriquement par rapport à un plan (X) qui contient les axes (21) le long desquels tombent les paraisons de verre,
**caractérisé en ce que**
l'appareil comporte un seule paire de guides rectilignes (14) qui sont raccordés à une paroi inférieure commune (3) du châssis de support (2),
les stators (17a, 18a) des moteurs électriques linéaires (17, 18) sont placés parallèlement aux guides (14) sur la paroi inférieure commune (3) de la structure de support (2) et dans l'espace compris entre les guides rectilignes (14) et sont espacés mutuellement dans la direction longitudinale des guides rectilignes ainsi qu'en direction perpendiculaire à cette direction longitudinale,
les deux chariots (8, 9) de support de lames sont montés de façon coulissante sur les deux guides (14), chaque chariot étant monté afin qu'il puisse coulisser sur les deux guides (14),
le stator (17a, 18a) de chacun des moteurs électriques linéaires (17, 18) porte les enroulements du moteur alors que l'organe mobile porte l'unité à aimants, et
les chariots comprennent des plaques respectives (8a, 9a) raccordés rigidement aux organes mobiles des moteurs électriques linéaires respectifs (17, 18) et portant chacune une paire de supports (15, 16) montés de façon coulissante sur les guides communs (14).

2. Appareil de coupe selon la revendication 1, **caractérisé en ce que** le dispositif de commande des moteurs électriques linéaires (17, 18) comprend un dispositif de commande électronique programmable destiné à commander les déplacements des moteurs avec une logique à réaction, et un dispositif de détection de la position des organes mobiles des moteurs.

3. Appareil de coupe selon la revendication 2, **caractérisé en ce que** le dispositif de détection est formé par des capteurs à effet Hall (31, 32) montés sur les organes mobiles des moteurs, et des codeurs linéaires (33, 34) montée à l'extérieur des moteurs.

4. Appareil de coupe selon l'une des quelconque des revendications précédentes, **caractérisé en ce que** le châssis de support (2) est disposé de manière que les moteurs (17, 18) et les guides linéaires (14) se trouvent dans un plan horizontal.

5. Appareil de coupe selon l'une quelconque des revendications précédentes, **caractérisé en ce que** le châssis de support (2) est disposé de manière que les moteurs (17, 18) et les guides linéaires (14) se trouvent dans un plan vertical.

6. Appareil de coupe selon l'une quelconque des revendications précédentes, **caractérisé en ce que** le châssis de support (2) comporte un dispositif (6, 7) de raccordement par pivotement à la structure de support de la machine entre une position de fonctionnement adjacente à la sortie de l'organe d'alimentation et une position de repos distante de cette sortie.

7. Appareil de coupe selon la revendication 1, **caractérisé en ce que** les guides rectilignes (14) sont raccordés mutuellement au centre et aux extrémités du châssis de support (2) par trois organes transversaux (20) ayant chacun un bord inférieur qui a une encoche (20a) dans laquelle pénètre une nervure longitudinale (21) qui est formée à chaque extrémité de chacun des chariots (8, 9).
